# EUROPÄISCHE PATENTSCHRIFT

(11) **EP 3 469 908 B1**
(45) Veröffentlichungstag und Bekanntmachung des Hinweises auf die Patenterteilung: **29.09.2021**
(21) Anmeldenummer: 18191390.6
(22) Anmeldetag: 29.08.2018
(51) Int. Cl.: A01N 59/00, A01N 59/16, A01N 25/12, C05G 3/80, C05D 9/00, C05D 9/02, A01P 21/00

(54) **VERWENDUNG VON TONEN ALS WACHSTUMSFÖRDERER IM PFLANZENBAU**
USE OF CLAYS AS GROWTH PROMOTOR IN PLANT CULTURE
UTILISATION DES ARGILES EN TANT QUE STIMULATEURS DE CROISSANCE DANS LA CULTURE

(30) Priorität: 16.10.2017 DE 102017124048
(43) Veröffentlichungstag der Anmeldung: 17.04.2019
(73) Patentinhaber: Stephan Schmidt KG, 65599 Dornburg-Langendernbach (DE)
(72) Erfinder: Schellhorn, Matthias, 65549 Limburg (DE)
(74) Vertreter: Müller, Eckhard

(56) Entgegenhaltungen:
- WO-A1-2016/134087
- DE-A1- 4 340 050
- CROKER J ET AL: "Effects of recycled bentonite addition on soil properties, plant growth and nutrient uptake in a tropical sandy soil", PLANT AND SOIL ; AN INTERNATIONAL JOURNAL ON PLANT-SOIL RELATIONSHIPS, KLUWER ACADEMIC PUBLISHERS, DO, Bd. 267, Nr. 1-2, 1. Dezember 2004 (2004-12-01), Seiten 155-163, XP019293281, ISSN: 1573-5036
- SOLTANI M ET AL: "Effects of Silicon Application at Nano and Micro Scales on the Growth and Nutrient Uptake of Potato Minitubers (Solanum tuberosumvar. Agria) in Greenhouse Conditions", BIONANOSCIENCE, SPRINGER US, BOSTON, vol. 8, no. 1, 18 November 2017 (2017-11-18), pages 218-228, XP036465781, ISSN: 2191-1630, DOI: 10.1007/S12668-017-0467-2 [retrieved on 2017-11-18]

## Beschreibung

Die vorliegende Erfindung betrifft die Verwendung von speziellen Tonen im Pflanzenbau, insbesondere im Obst-, Gemüse- und Reisanbau.

Tone sind im Gartenbau, hier bevorzugt im Zierpflanzenbau, als Zusatzstoff für die dort verwendeten Substrate weit verbreitet. Bekannt ist, dass Tone in der Regel folgende wesentlichen Eigenschaften haben, die insbesondere bei Kulturen mit Wachstumsperioden von größer als 8 Wochen einen positiven Einfluss haben:
a) gute Wasserspeicherung und Verringerung von leicht verfügbarem Wasser,
b) gute Nährstoffspeicherung für z.B. Kalium und Phosphor aufgrund chemischer Wechselwirkungen und
c) Verbesserung der Wiederbenetzbarkeit ausgetrockneter Substrate.

Darüber hinaus werden Tone auch zur physikalischen Stabilisierung von sogenannten Presstopferden im Gemüsebau oder bei der Kultur von Topfkräutern verwendet. Aufgrund des Einsatzes von Ton steht bei der letztgenannten Verwendung den Pflanzen weniger leicht verfügbares Wasser zur Verfügung, wodurch ein gedrungener und kompakter Wuchs gefördert wird.

Weiterhin ist aus J. Plant Nutr. Soil Sci. 2013, 176, 809-817, bekannt, dass Tone auch einen wertvollen Beitrag zur erhöhten Toleranz von Pflanzen gegenüber pflanzenschädigenden Toxinen, im genannten Fall gegenüber Mangan, leisten können. In diesem Zusammenhang wird auch der Einfluss von pflanzenverfügbarem Silicium bzw. Kieselsäure auf die Mn-Toxizität untersucht.

CROKER J ET AL: "Effects of recycled bentonite addition on soil properties, plant growth and nutrient uptake in a tropical sandy soil", PLANT AND SOIL ; AN INTERNATIONAL JOURNAL ON PLANT-SOIL RELATIONSHIPS, KLUWER ACADEMIC PUBLISHERS, DO, Bd. 267, Nr. 1-2, 1. Dezember 2004 (2004-12-01), Seiten 155-163, ISSN: 1573-5036 offenbaren die Anwendung eines mit verschiedenen Kationen (Ca-, Mg- und K-Kationen) angereicherten Bentonits zur Verbesserung der Bodenbeschaffenheit, des Pflanzenwachstums und der Nährstoffaufnahme bei tropischen, sandigen Böden.

WO 2016/ 134087 A1 beschreibt die Verwendung von wässrigen Aufschlämmungen natürlicher Bentonite. Zur Verbesserung der Keimung des Saatgutes werden diese Aufschlämmungen zusammen mit dem Saatgut in die Pflanzerde eingebracht.

DE 43 40 050 A1 bezieht sich auf die Verwendung einer Mischung enthaltend Montmorillonit in Form von Bentonit zur Regeneration von ökologisch toten Böden und zur Verbesserung des Pflanzenwachstums in diesen Böden. Die Mischung kann trocken auf dem Boden verteilt werden.

Auf dem Markt sind die verschiedensten Tone oder Tongranulate als Zusatzstoff für Substrate im Pflanzenbau oder für Blumenerden erhältlich. Als Beispiel seien 2 Produkte der Stephan Schmidt KG, Dornburg, BRD, genannt: Florisol® TM profi und Florisol® B-extra. Bei dem ersten Produkt handelt es sich um eine Mischung aus Bentonit und stark eisenhaltigen, umgelagerten Tonen. Der enthaltene Bentonit unterstützt ein gedrungenes und kompaktes Pflanzenwachstum, verfügt über leicht verfügbares Silicium und kann toxische Einflüsse auf die Pflanzen durch hohe Salz- oder Schwermetallgehalte kompensieren. Bei Florisol® B-extra handelt es sich um einen reinen, natürlich vorkommenden Calicum-Bentonit, der ähnliche Eigenschaften wie das obengenannte Produkt aufweist.

Als Zusatzstoff für Substrate oder als Substrat im Garten- und Pflanzenbau ist Torf ebenfalls weit verbreitet. Besonders der sogenannte Weißtorf findet im Gemüse- und Gartenbau vielseitige Verwendung. Weißtorf ist von hellbrauner Farbe und wird aus den oberen Schichten der Moore genommen. Mit Weißtorf kann man z.B. Gartenböden auflockern und den Nährstoffgehalt der Gartenerde je nach Bedarf anpassen. Weißtorf hat in der Regel einen pH-Wert von 3-4, während normale Gartenerde meist einen pH-Wert von 5 bis 6,5 aufweist.

Der Fachmann im Pflanzen-, Gemüse- und/oder Gartenbau wird stets bemüht sein, die äußeren Bedingungen und damit auch die Pflanzerde oder die Pflanzensubstrate so zu gestalten, dass diese ein gesundes und ausreichend schnelles Pflanzenwachstum unterstützen und fördern.

Es war daher eine Aufgabe der vorliegenden Erfindung, im Pflanzenbau ein gesundes Pflanzenwachstum bei möglichst hohem Ertrag zu gewährleisten. Dies sollte zudem möglichst einfach, effizient und überdies auch nachhaltig gestaltet und ausführbar sein. Unter hohem Ertrag im Sinne der vorliegenden Erfindung wird sowohl ein beschleunigtes Pflanzenwachstum als auch eine Erhöhung der geernteten Biomasse bzw. der erhaltenen Pflanzentrockenmasse verstanden. Schließlich sollten die gewünschten Effekte möglichst auf natürlichem Weg realisiert werden können, d.h. ohne den Einsatz von synthetischen Düngern oder Pflanzenbehandlungsmitteln.

Es wurde nun gefunden, dass diese Aufgabe durch die Verwendung bestimmter Tone oder Tonmischungen als Zusatzstoffe für im Pflanzen-, Garten- und Gemüsebau eingesetzte Substrate entweder vollständig oder doch weitgehend, zumindest mit einer deutlichen Verbesserung gegenüber dem Stand der Technik, erzielt werden kann. Die erfindungsgemäss verwendeten Zusatzstoffe werden somit als Wachstumsförderer zum Beschleunigen des Pflanzenwachstums und/oder zur Erhöhung der geernteten Biomasse oder erhaltenen Pflanzentrockenmasse eingesetzt und verwendet.

Bei den erfindungsgemäss verwendeten Tonen handelt es sich bevorzugt um Bentonite. Als Bentonit werden tonhaltige Gesteine bezeichnet, die durch Verwitterung vulkanischer Aschen entstanden sind. Es handelt sich um kolloidale Tone, die bevorzugt zu mehr als 30 Gew.-%, insbesondere zu mehr als 50 Gew.-%, aus Smektitmineralen (Dreischichtsilikate mit Quellfähigkeit) bestehen, und welche besondere Eigenschaften wie z.B. Quellfähigkeit und Wasseradsorption aufweisen. Neben den Smektitmineralen, hier handelt es sich meist um Montmorillonit (Montmorillonit-Bentonit), enthalten Bentonite andere Tonminerale, Quarz, Feldspat, Glimmer und vulkanisches Glas (kolloidale Kieselsäure SiO₂). Je nach Einsatzgebiet, z.B. Verwendung als Tierfutterzusatz oder Lebensmittelzusatzstoff) enthalten die auch hier bevorzugten Bentonite 60-90 Gew-% an Montmorillonit bzw. Smektitmineralen.

Eine besondere Eigenschaft des Montmorillonits und damit auch der hier bevorzugten Bentonite ist die hohe Kationenaustauschkapazität (KAK). Die KAK ist definiert als summarischer Anteil der mit einer Neutralsalzlösung austauschbaren Kationen des Bodens an der Austauschkapazität. Die KAK ist somit die Summe der von den Austauschern, z.B. Tonminerale, Humus, sorbierten und austauschfähigen Kationen. Die KAK ist eine wichtige Bodenkenngröße und steigt mit dem pH-Wert der Austauschlösung an. Sie wird in meq/100g Boden bzw. Austauscher angegeben. So zeigen Montmorillonite einen sehr hohen KAK-Wert (80-120 meq/100g) im Vergleich zu anderen Bodenmineralien und auch im Vergleich zur Tonfraktion mitteleuropäischer Böden, welche einen KAK-Wert von 40-60 meq/100g aufweist (Mückenhausen, E. (1993): Die Bodenkunde). Der KAK-Wert hat damit Bedeutung für die Freisetzung und Pufferung von wichtigen ein- und zweiwertigen kationischen Nährstoffen und Spurenelementen in den Kultursubstraten, wie z.B. für K, NH₄, Zn und Mo.

Weiterhin sind die erfindungsgemäss verwendeten Tone (Bentonite) durch einen hohen Eisengehalt gekennzeichnet. Der Eisengehalt wird als Gesamteisengehalt als Fe₂O₃ am ungeglühten Ton gemessen und beträgt mehr als 10 Gew.-%, insbesondere mehr als 13 Gew.-%. Hohe Eisengehalte sind ein Kennzeichen für leicht veränderbare (Degradation sowie Neubildung) Tonminerale mit wechselnden (Kationen-) Wertigkeiten. Zudem tragen kolloidale Eisenhydroxide zu einer signifikanten Phosphatpufferung im Substrat bei.

Insbesondere wurde gefunden, dass sich erfindungsgemäss verwendete Tone, enthaltend oder bestehend aus Betonite(n) von gewöhnlichen Tonen durch eine deutlich erhöhte Siliziumfreisetzungsrate (in Form von kolloidaler oder amorpher Kieselsäure SiO₂, welche auch als Glasanteil des Tons bezeichnet wird) unterscheiden. Diese Siliziumfreisetzungsrate kann grundsätzlich mittels einschlägiger Extraktionsverfahren, wie der 1:5 Volumenmethode der RHP sowie der 1:1,5 Mixture Trial Methode der RHP, oder in wässrigen Boratlösungen (Z. Pflanzenernähr. Bodenk. 118, 22-34) bestimmt werden. Die Siliziumfreisetzungsrate der Tone korrespondiert in der Regel mit der Siliziumaufnahme (Si-Aufnahmerate) durch die in dem Substrat wachsenden Pflanzen. Als besonders geeigneter Nachweis zur Siliziumaufnahme oder Verfügbarkeit und als einfach durchführbar hat sich hier ein Keimpflanzversuch mit Reis erwiesen, bei dem z. B. 200 kg erfindungsgemäss verwendeter Ton/m³ Substrat verwendet werden. Die Si-Bestimmung im Spross der Reissämlinge ergibt, dass dort die Konzentration an Si das 12-fache von dem Wert beträgt, welchen Reissämlinge aufweisen, die in dem tonfreien Substrat (Weißtorfsubstrat) gezogen werden. Gewöhnliche Tone zeigen hier bei gleichem Versuchsaufbau gegenüber dem tonfreien Torfsubstrat deutlich niedrigere Werte, die meist weniger als das 5-fache des tonfreien Substrats betragen. Eine weitere Erhöhung der Si-Aufnahme durch die jeweiligen Pflanzen erscheint bei optimierten Bedingungen ohne weiteres möglich.

Es ist eine weitere Erkenntnis der vorliegenden Erfindung, dass sich die erfindungsgemäss verwendeten Tone nicht unbedingt durch einen sehr hohen Si- bzw. SiO₂-Gehalt auszeichnen. Maßgeblich ist die Si-Freisetzungsrate (in Form von bioverfügbarem Si/SiO₂), die bei einem gewöhnlichen Ton trotz sehr hohem SiO₂-Gehalt für die Zwecke der Erfindung zu gering ist.

Diese erhöhte Si-Freisetzung durch die im Boden/Substrat enthaltenen erfindungsgemäss verwendeten Tone (Bentonite) führt zu einem schnelleren Wachstum der jeweiligen Kulturpflanzen und damit zu einer zum Teil deutlich verkürzten Kultur- oder Vegetationszeit. Gleichzeitig wird ein erhöhter Ertrag in Form von erhaltener Biomasse oder Pflanzentrockenmasse erzielt. Die erfindungsgemäss verwendeten Tone sind damit als einfach einzusetzende Wachstumsförderer im Pflanzen-, Gemüse- und Gartenbau geeignet.

Erfindungsgemäß können die erfindungsgemäss verwendeten Tone auch mit gewöhnlichen Tonen gemischt werden, wobei der Anteil der erfindungsgemäss verwendeten Tone am Tongemisch bevorzugt mindestens 30 Gew.-%, insbesondere mindestens 50 Gew.-%, betragen sollte.

Die erfindungsgemäss verwendeten Tone oder Tongemische sollten möglichst homogen in ein Substrat eingebracht bzw. nach dem Mischen möglichst homogen in dem Substrat verteilt sein. Dazu ist es vorteilhaft, die Tone als Granulat oder Pulver aufzubereiten, da diese dann einfach mit dem Substrat gemischt werden können. Mit Granulaten, welche Korngrößen im Bereich von 0-4 mm, bevorzugt 0-1 mm oder 1-4 mm aufweisen, und Pulvern mit einem Größtkorn von kleiner als 0,5 mm lassen sich auf einfache Weise höchstmögliche Homogenitäten erzielen.

Der Anteil der erfindungsgemäss verwendeten Tone oder Tongemische an den jeweiligen Kultursubstraten kann je nach Einsatz und Verwendungszweck in relativ weiten Grenzen schwanken und beträgt bevorzugt von 20 bis 80 kg Ton/m³ fertiges Kultursubstrat in der Anwendung Wachstumsförderung. In Ausnahmen können diese Aufwandmengen unter- bzw. überschritten werden. So genügen bereits 10 kg Ton/m³ für kulturfähiges Substrat, sofern dieser ausschließlich für Effekte in der Benetzbarkeit und Wasseraufnahme eingesetzt wird. Für die Pufferung von Nährstoffen bei Starkzehrern, wie z.B. Chrysanthemen, werden bevorzugt auch 60 - 100 kg Ton/m³ fertiges Substrat eingesetzt, insbesondere, wenn die verwendeten Tone von geringerer Effizienz sind. Den hohen Dosierungen wird heutzutage jedoch durch den Einsatz höher effizienterer Tone entgegengewirkt, um das Gewicht der Substrate gering zu halten.

Erfindungsgemäß bevorzugt verwendet sind die folgenden Substrate als Ausgangsmaterial für die Mischung mit den erfindungsgemäss verwendeten Tonen oder Tongemischen: Substrate auf Basis von Torfen und Torfersatzstoffen, wie zum Beispiel Kokosfasern, Holzfasern, Rindenprodukten und Kompost, aber auch mineralische Substrate sowie organisch mineralische Substrate auf Basis oder unter Verwendung von Perlite und / oder Steinwolle.

Der Einsatz der erfindungsgemäss verwendeten Tone als Wachstumsförderer hat sich bisher insbesondere in den nachfolgenden Kulturen als besonders vorteilhaft erwiesen:
Generell für alle Pflanzen, die bekanntlich Phytolithe in den Zellstrukturen bilden. Hierzu gehören nahezu alle einkeimblättrigen Pflanzen wie Ziergräser aber auch die meisten Getreidearten, hier insbesondere Reisjungpflanzen. Hohe Si-Aufnahmen werden ferner bei einigen Gemüsearten, hier insbesondere Gurken, beobachtet.

Als Beispiele für erfindungsgemäß einsetzbare Tone können die genannten Produkte Florisol® TM profi und Florisol® B-extra angeführt werden. Bei Florisol® TM profi handelt es sich um eine Mischung aus Bentonit (mit hohem Glasanteil) und stark eisenhaltigen, umgelagerten Tonen (Smektit: 30 - 45 Gew.-%, SiO₂: ca. 20 Gew.-%, KAK: 42 meq/100g) und bei Florisol® B-extra um einen natürlich vorkommenden Ca-Bentonit mit hohem Glasanteil (Smektit: ca. 80 Gew.-%, SiO₂: ca. 10 Gew.-%, KAK: > 65 meq/100g).

Die genannten Produkte und auch eine Vielzahl weiterer erfindungsgemäßer Tone bzw. Bentonite sind im Handel erhältlich. Wie ausgeführt, werden diese Produkte bislang in Kultursubstraten zur gezielten Pufferung der Nährstoffe, K, NH₄ sowie P eingesetzt und finden weitere Anwendungen in Prozessen, in denen eine NH₄-Sorption erwünscht ist, wie z.B. in der Güllekonditionierung. Weitere erfindungsgemäss verwendete Tone, wie z.B. Florisol® PTS plus werden hingegen als Klebeton in sogenannten Presstopferden eingesetzt.

Der Smektitanteil, bevorzugt in Form von Montmorillonit, beträgt bei erfindungsgemäßen erfindungsgemäss verwendeten Tonen bevorzugt mehr als 30 Gew.-%, insbesondere mehr als 50 Gew.-% und besonders bevorzugt mehr als 70 Gew.-%.

Allgemein haben die erfindungsgemäß bevorzugten Tone eine Kationenaustauschkapazität (KAK) von größer als 40 meq/100g, bevorzugt von größer wie als 60 meq/100g und insbesondere von größer als 70 meq/100g.

Für die Zwecke der vorliegenden Erfindung sind insbesondere die nachfolgend aufgeführten Analysenmethoden in Bezug auf geeignete Tone einsetzbar:
a) chemische Analyse/chemischer Stoffbestand: Röntgenfluoreszenzanalyse (XRF oder RFA), wobei verschiedene Elemente in Form ihrer Oxide (in Gew.-%), wie z.B. SiO₂, Fe₂O₃, CaO, K₂O, P₂O₅, und weitere Elemente als solche in mg/kg Ton angegeben werden, oder auch die Röntgendiffraktometrie (XRD)
b) Mineralbestand (in Gew.-%; z.B. Anteil Smektit, Illit, Kaolinit, Quarz): Röntgendiffraktometrie mit Rietveldanalyse (RDA)
c) Kationenaustauschkapazität (KAK; z.B. nach der Cu-Trien Methode in den Veröffentlichungen der BGR (Bundesanstalt für Geowissenschaften und Rohstoffe)).
d) Si-Freisetzungsrate: bestimmbar durch Eluatverfahren, hier besonders geeignet die 1:1,5 Trial Mixture Methode der RHP (RHP ist eine niederländische Zertifizierungsorganisation für Substrate für Endverbraucher und Gartenbau).
e) Si-Bestimmung in den Pflanzensprossen/-wurzeln: gemessen durch Reiskeimpflanzenanalyse, wie nachfolgend beschrieben.

Das nachfolgende Ausführungsbeispiel zeigt die vorteilhafte Wirkung der erfindungsgemäss verwendeten Tone als Wachstumsförderer im Pflanzenbau am Beispiel von Keimpflanzenversuchen mit Reis. Die hier beschriebene Methode ist ein einfach anwendbarer Nachweis für die Si-Verfügbarkeit der erfindungsgemäßen Tone.

### Versuchsaufbau

| | |
|---|---|
| Grundsubstrat: | Weißtorf angekalkt auf pH 5,5 (ca. 5g Kalk / L Substrat) |
| Versuchssubstrat: | a) Weißtorf - Grundsubstrat |
| | b) Weißtorf mit 200 g/L Ton 1 (erfindungsgemäss verwendeter Bentonit) |
| | c) Weißtorf mit 200 g/L Ton 2 (kaolinitisch - illitischer Ton aus dem Westerwald) |
| Tonzusammensetzung: | (RFA/XRF) (nur Oxide) |

**Tabelle 1: RFA-Ergebnisse, Oxide in Gew.-%**

| Probe | SiO₂ | Al₂O₃ | Fe₂O₃ | CaO | MgO | K₂O | Na₂O | TiO₂ |
|---|---|---|---|---|---|---|---|---|
| Bentonit Rohstoff 1 | 45.12 | 15.95 | 12.51 | 2.76 | 3.82 | 0.98 | 0.36 | 2.98 |
| Ton Rohstoff 2 | 66,61 | 17,05 | 5,72 | 0.18 | 0.33 | 1,54 | 0.10 | 1,09 |

**Tabelle 2: RDA Phasenanalyse, Mineralanteile in Gew.-%**

| Probe | Smektit | Illit | Kaolinit | Quarz | andere |
|---|---|---|---|---|---|
| Bentonit Rohstoff 1 | 45 | 20 | 20 | 15 | <5 |
| Ton Rohstoff 2 | <5 | 45 | 20 | 35 | <5 |

| | |
|---|---|
| KAK Rohstoff 1: | 79 meq/100g |
| KAK Rohstoff 2: | 8,1 meq/100g |

### Versuchsdurchführung

- Gefäße:: Töpfe mit 13 cm Durchmesser (ca. 1 I Volumen) 4 Töpfe je Versuchssubstrat, in jedem Topf ein Dosierlöffel Reiskörner

Aufstellung im Gewächshaus, Töpfe in Schalen mit ca. 2 cm Wasseranstau (je Schale 1 Topf)

| | |
|---|---|
| Versuchsdauer: | 4 Wochen |

### Versuchsauswertung:

Nach einer Kulturdauer von 4 Wochen wurden die Pflanzen geerntet und die Trockenmasse sowie die Si-Konzentration in der Trockenmasse bestimmt. Hierbei ergaben sich folgende Ergebnisse:

| **Probe** | **Trockengewicht netto** | | **Mittelwert** | **Normiert auf Torf** | **Si in mg/100mg** |
|---|---|---|---|---|---|
| **Ton 1-1 Bentonit** | **2,00** | **g** | **2,085 g** | **129 %** | **4,00** |
| **Ton 1-2 Bentonit** | **2,14** | **g** | | | |
| **Ton 1-3 Bentonit** | **2,05** | **g** | | | |
| **Ton 1-4 Bentonit** | **2,15** | **g** | | | |
| Ton 2-1 | 1,66 | g | 1,785 g | 111 % | 1,49 |
| Ton 2-2 | 1,76 | g | | | |
| Ton 2-3 | 1,84 | g | | | |
| Ton 2-4 | 1,88 | g | | | |
| Torf-1 | 1,62 | g | 1,615 g | 100 % | 0,30 |
| Torf-2 | 1,69 | g | | | |
| Torf-3 | 1,47 | g | | | |
| Torf-4 | 1,68 | g | | | |

## Patentansprüche

1. Verwendung von Ton oder Tongemischen als Wachstumsförderer im Pflanzenbau, wobei als Ton oder als Bestandteil der Tongemische ein Bentonit mit einem Gesamteisengehalt, ausgedrückt als Fe₂O₃, von mehr als 10 Gew.-% verwendet wird.

2. Verwendung nach Anspruch 1, **dadurch gekennzeichnet, dass** der Ton zu mehr als 50 Gew.-% aus Smektitmineralien besteht.

3. Verwendung nach Anspruch 2, **dadurch gekennzeichnet, dass** es sich bei dem Smektitmineral um Montmorillonit handelt.

4. Verwendung nach einem der Ansprüche 1 bis 3, **dadurch gekennzeichnet, dass** der Ton eine Kationenaustauschkapazität von größer als 70 meq/100 g (70 mmol/100g) aufweist.

5. Verwendung nach einem der Ansprüche 1 bis 4, **dadurch gekennzeichnet, dass** der Ton oder das Tongemisch in Form eines Granulats oder Pulvers einem Kultursubstrat beigemischt wird.

6. Verwendung nach Anspruch 5, **dadurch gekennzeichnet, dass** das Granulat im Wesentlichen aus Teilchen mit einer Korngröße von 0-4 mm besteht und das Pulver ein Größtkorn von kleiner als 0,5 mm aufweist.

7. Verwendung von Ton oder Tongemischen als Wachstumsförderer in einem Kultursubstrat für den Pflanzenbau nach einem der Ansprüche 1 bis 6, wobei das Kultursubstrat den Ton oder das Tongemisch von 20 bis 80 kg Ton/m³ fertiges Substrat enthält.

8. Verwendung nach Anspruch 7, **dadurch gekennzeichnet, dass** das Kultursubstrat Weißtorf enthält.

## Claims

1. Use of clay or clay mixtures as growth promoters in plant cultivation, wherein a bentonite having a total iron content, expressed as Fe₂O₃, of more than 10% by weight is used as clay or as constituent of the clay mixtures.

2. Use according to Claim 1, **characterized in that** the clay consists to an extent of more than 50% by weight of smectite minerals.

3. Use according to Claim 2, **characterized in that** the smectite mineral is montmorillonite.

4. Use according to any of Claims 1 to 3, **characterized in that** the clay has a cation exchange capacity of greater than 70 meq/100 g (70 mmol/100 g).

5. Use according to any of Claims 1 to 4, **characterized in that** the clay or the clay mixture is added in the form of a granular material or powder to a culture substrate.

6. Use according to Claim 5, **characterized in that** the granular material consists essentially of particles having a particle size of 0-4 mm and the powder has a maximum particle size of less than 0.5 mm.

7. Use of clay or clay mixtures as growth promoters in a culture substrate or plant cultivation according to any of Claims 1 to 6, wherein the culture substrate contains the clay or the clay mixture in an amount of from 20 to 80 kg of clay/m³ of finished substrate.

8. Use according to Claim 7, **characterised in that** the culture substrate contains white peat.

## Revendications

1. Utilisation d'argile ou de mélanges d'argiles en tant qu'activateur de croissance en culture végétale, une bentonite étant utilisée en tant qu'argile ou en tant qu'ingrédient des mélanges d'argiles, dotée d'une teneur totale en fer, exprimée en tant que Fe₂O₃, de plus de 10 % en poids.

2. Utilisation selon la revendication 1, **caractérisée en ce que** l'argile est constituée de plus de 50 % en poids de minéraux de type smectite.

3. Utilisation selon la revendication 2, **caractérisée en ce que** le minéral de type smectite est de la montmorillonite.

4. Utilisation selon l'une quelconque des revendications 1 à 3, **caractérisée en ce que** l'argile présente une capacité d'échange de cations supérieure à 70 méq/100 g (70 mmole/100 g).

5. Utilisation selon l'une quelconque des revendications 1 à 4, **caractérisée en ce que** l'argile ou le mélange d'argiles est mélangé(e) sous forme d'un granulé ou d'une poudre à un substrat de culture.

6. Utilisation selon la revendication 5, **caractérisé en ce que** le granulé est essentiellement constitué de particules dotées d'une taille de grain de 0 à 4 mm et la poudre présente une taille de grain maximale inférieure à 0,5 mm.

7. Utilisation d'argile ou de mélanges d'argiles en tant qu'activateur de croissance dans un substrat de culture pour la culture végétale selon l'une quelconque des revendications 1 à 6, le substrat de culture contenant l'argile ou le mélange d'argiles à raison de 20 à 80 kg d'argile/m³ de substrat fini.

8. Utilisation selon la revendication 7, **caractérisée en ce que** le substrat de culture contient de la tourbe blanche.
